# EUROPEAN PATENT APPLICATION

(11) **EP 4 129 893 A1**
(43) Date of publication of application: **08.02.2023**
(21) Application number: 21780227.1
(22) Date of filing: 26.03.2021
(51) Int. Cl.: C01B 3/24, C01B 3/56, C07C 5/367, C07C 15/06, H01M 8/0612

(54) **HYDROGEN SUPPLY SYSTEM**

(30) Priority: 31.03.2020 JP 2020062504
(71) Applicant: ENEOS Corporation, Chiyoda-ku Tokyo 100-8162 (JP)
(72) Inventor: SEIKE, Tadashi, Tokyo 100-8162 (JP); IKI, Hideshi, Tokyo 100-8162 (JP); MAEDA, Seiji, Tokyo 100-8162 (JP)
(74) Representative: Grünecker Patent- und Rechtsanwälte PartG mbB
(86) International application number: PCT/JP2021/012884
(87) International publication number: WO 2021/200665

(57) **Abstract**

Provided is a hydrogen supply system that supplies hydrogen. The hydrogen supply system includes: a dehydrogenation reaction unit that subjects a raw material including a hydride to a dehydrogenation reaction to obtain a hydrogen-containing gas; a heating mechanism that heats the dehydrogenation reaction unit by using electric power; and an electric power supply unit that supplies at least one of electric power based on renewable energy and electric power based on thermal power generation equipped with carbon dioxide capture and storage to the heating mechanism.

## Description

### Technical Field

The present disclosure relates to a hydrogen supply system that supplies hydrogen.

### Background Art

As a hydrogen supply system in the related art, for example, a hydrogen supply system disclosed in Patent Literature 1 is known. The hydrogen supply system disclosed in Patent Literature 1 includes a tank that store a hydride of aromatic hydrocarbon as a raw material, a dehydrogenation reaction unit that subjects the raw material supplied from the tank to a dehydrogenation reaction to obtain hydrogen, a gas-liquid separation unit for gas-liquid separation of the hydrogen obtained in the dehydrogenation reaction unit, and a hydrogen purification unit that purifies the gas-liquid separated hydrogen.

### Citation List

### Patent Literature

Patent Literature 1: Japanese Unexamined Patent Publication No. 2006-232607

### Summary of Invention

### Technical Problem

In the above-described hydrogen supply system, the dehydrogenation reaction unit subjects the raw material to a dehydrogenation reaction by an endothermic reaction. Accordingly, the hydrogen supply system includes a heating mechanism that heats the dehydrogenation reaction unit. Here, energy is required to heat the dehydrogenation reaction unit by the heating mechanism. At this time, CO₂ is generated when the heating mechanism performs heating by combusting a fossil fuel. The hydrogen supply system is required to reduce CO₂ when producing hydrogen.

The present disclosure has been made to solve the above-described problem, and an object thereof is to provide a hydrogen supply system capable of reducing CO₂ when producing hydrogen.

### Solution to Problem

To solve the above-described problem, according to an aspect of the present disclosure, there is provided a hydrogen supply system that supplies hydrogen. The hydrogen supply system includes: a dehydrogenation reaction unit that subjects a raw material including a hydride to a dehydrogenation reaction to obtain a hydrogen-containing gas; a heating mechanism that heats the dehydrogenation reaction unit by using electric power; and an electric power supply unit that supplies at least one of electric power based on renewable energy and electric power based on thermal power generation equipped with carbon dioxide capture and storage to the heating mechanism.

The hydrogen supply system includes the heating mechanism that heats the dehydrogenation reaction unit by using electric power. The electric power supply unit that supplies electric power to the heating mechanism can supply at least one of electric power based on renewable energy and electric power based on thermal power generation equipped with carbon dioxide capture and storage to the heating mechanism. According to this, the heating mechanism can heat the dehydrogenation reaction unit by electric power based on renewable energy, or the like. The hydrogen supply system can produce hydrogen by using renewable energy without using a fossil fuel or in a state in which the fossil fuel is reduced. In addition, the hydrogen supply system can reduce CO₂ when obtaining electric power by using thermal power generation equipped with carbon dioxide capture and storage. As described above, CO₂ when producing hydrogen can be reduced.

The electric power supply unit may include an electrical storage unit that stores at least one of electric power based on the renewable energy, and electric power based on the thermal power generation equipped with carbon dioxide capture and storage. In the electric power based on the renewable energy, it may be difficult to obtain an output in accordance with user's intention differently from energy by a fossil fuel. For example, solar power generation, wind power generation, hydroelectric power generation, and the like are dependent on weather and natural conditions. In contrast, the electric power supply unit includes the electrical storage unit that stores electric power. Accordingly, the electrical storage unit can store electric power when a large amount of renewable energy is obtained and electric power that is used by the heating mechanism is small. In addition, the electrical storage unit can supply the stored electric power at timing at which the obtained renewable energy is small. In addition, in a case of using electric power based on the thermal power generation equipped with carbon dioxide capture and storage, the electric power supply unit can store electric power in the electrical storage unit at timing at which electric power is easily obtained (timing at which electric power is not expensive), and can supply the stored electric power at timing at which electric power is difficult to be obtained.

According to another aspect of the present disclosure, there is provided with a hydrogen supply system that supplies hydrogen. The hydrogen supply system includes: a dehydrogenation reaction unit that subjects a raw material including a hydride to a dehydrogenation reaction to obtain a hydrogen-containing gas; and a heating mechanism that heats the dehydrogenation reaction unit by using a heat medium. The dehydrogenation reaction unit includes a first flow passage in which a dehydrogenation catalyst that performs the dehydrogenation reaction is disposed and through which the raw material circulates, and a second flow passage which is provided in parallel with the first flow passage, and through which the heat medium circulates. The heating mechanism includes a heat medium supply unit that supplies the heat medium to the second flow passage of the dehydrogenation reaction unit, and a heating unit that heats the dehydrogenation catalyst through the heat medium.

Since the heating mechanism includes the heating unit, heat can be supplied to the dehydrogenation catalyst that performs an endothermic reaction. Here, the dehydrogenation reaction unit includes the second flow passage that is provided in parallel with the first flow passage in which the dehydrogenation reaction is performed by the dehydrogenation catalyst. The heat medium supply unit of the heating mechanism supply the heat medium to the second flow passage. In addition, the heating unit of the heating mechanism heats the dehydrogenation catalyst through the heat medium. The heating mechanism can heat the dehydrogenation catalyst by diffusing heat of the heating unit to the inside of the second flow passage by the heat medium. Accordingly, the heating mechanism can improve heating uniformity at the inside of the dehydrogenation reaction unit. As described above, since the heating uniformity is improved, and heat usage efficiency is improved, energy can be effectively used. As a result, CO₂ when producing hydrogen can be reduced.

The heating unit may be provided inside the second flow passage. In this case, the heating unit is provided in the second flow passage provided in parallel with the first flow passage. Accordingly, heat of the heating unit is efficiently transferred to the dehydrogenation catalyst.

The second flow passage may be divided into a plurality of sections by a partition member provided inside the second flow passage in a first direction in which the second flow passage extends. As described above, when the second flow passage is divided into a plurality of sections, the heating mechanism can adjust a heating aspect in correspondence with the sections. According to this, heat usage efficiency is improved, and thus energy can be effectively used.

The heating mechanism may include a plurality of the heating units, each being disposed for each of the plurality of sections at the inside of the second flow passage. The plurality of heating units can adjust a heating aspect in correspondence with each of the sections. According to this, heat usage efficiency is improved, and thus energy can be effectively used.

The heating mechanism may include a plurality of temperature detection units, each detecting a temperature of each of the plurality of sections. The plurality of temperature detection units can detect a temperature of each of the sections, and thus the heating mechanism can adjust a heating aspect in correspondence with the sections on the basis of the detection result. According to this, heat usage efficiency is improved, and thus energy can be effectively used.

The partition member may include an opening that permits circulation of the heat medium in the first direction on one end side in a second direction that intersects the first direction. In this case, in one section divided by the partition member, the heat medium flows to one end side in the second direction toward the opening, and flows to another section through the opening. As described above, in the one section, a flow of the heat medium flowing toward the second direction is formed, and thus it is possible to lengthen staying time of the heat medium in the section.

The partition member may close a space between the sections different from each other, and the heating mechanism may include a plurality of the heat medium supply units, each supplying the heat medium to each of the plurality of sections. The plurality of heat medium supply units can adjust a supply aspect of the heat medium in correspondence with each of the sections. According to this, heat usage efficiency is improved, and thus energy can be effectively used.

According to still another aspect of the present disclosure, there is provided a hydrogen supply system that supplies hydrogen. The hydrogen supply system includes: a dehydrogenation reaction unit that subjects a raw material including a hydride to a dehydrogenation reaction to obtain a hydrogen-containing gas; a heating mechanism that heats the dehydrogenation reaction unit by using electric power; and an electric power supply unit that supplies electric power from grid power to the heating mechanism.

### Advantageous Effects of Invention

According to the present disclosure, it is possible to provide a hydrogen supply system capable of reducing CO₂ when producing hydrogen.

### Brief Description of Drawings

FIG. 1 is a block diagram illustrating a configuration of a hydrogen supply system according to an embodiment of the present disclosure.
FIG. 2 is a view illustrating an example of a configuration of an electric power supply unit that supplies electric power to a heating mechanism.
FIG. 3 is a schematic configuration diagram illustrating a configuration of a dehydrogenation reaction unit and a heating mechanism.
FIG. 4 is a schematic configuration diagram illustrating a configuration of a dehydrogenation reaction unit and a heating mechanism of a hydrogen supply system according to a modification example.
FIG. 5 is a schematic configuration diagram illustrating a configuration of a dehydrogenation reaction unit and a heating mechanism of a hydrogen supply system according to a modification example.
FIG. 6 is a view illustrating an example of arrangement of heaters which constitute a heating unit.
FIG. 7 is a view illustrating an example of arrangement of temperature detection units.

### Description of Embodiments

Hereinafter, an appropriate embodiment of a hydrogen supply system according to the present disclosure will be described in detail with reference to the accompanying drawing. In the following description, the same reference numeral will be given of the same or equivalent portion, and redundant description will be omitted.

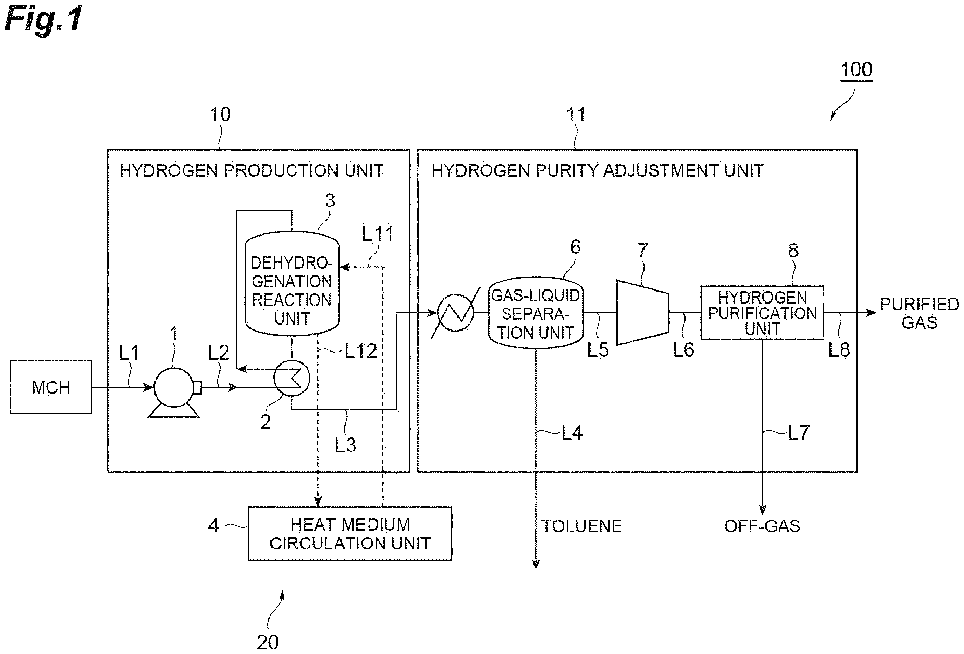

FIG. 1 is a block diagram illustrating a configuration of the hydrogen supply system according to the embodiment of the present disclosure. A hydrogen supply system 100 uses an organic compound (a liquid at an ordinary temperature) as a raw material. Note that, in a hydrogen purification process, a dehydrogenation product (organic compound (liquid at an ordinary temperature)) obtained by dehydrogenating the organic compound (a liquid at an ordinary temperature) that is a raw material is removed. Examples of the organic compound that is a raw material include an organic hydride. An appropriate example of the organic hydride is a hydride obtained by causing hydrogen that is massively produced at an oil refinery and aromatic hydrocarbon to react with each other. In addition, the organic hydride is not limited to aromatic hydrogenated compound, and includes 2-propanol system (hydrogen and acetone are produced). The organic hydride can be transported to the hydrogen supply system 100 by a tank lorry as a liquid fuel in a similar manner as in gasoline or the like. In this embodiment, as the organic hydride, methyl cyclohexane (hereinafter, referred to as "MCH") is used. In addition, as the organic hydride, a hydride of aromatic hydrocarbon such as cyclohexane, dimethyl cyclohexane, ethyl cyclohexane, decalin, methyl decalin, dimethyl decalin, and ethyl decalin is applicable. Note that, an aromatic compound is an appropriate example in which the amount of hydrogen contained is particularly large. The hydrogen supply system 100 can supply hydrogen to a fuel cell vehicle (FCV) or a hydrogen engine vehicle. Note that, application can also be made to a case of producing hydrogen from a natural gas containing methane as a main component, LPG containing propane as a main component, or liquid hydrocarbon raw materials such as gasoline, naphtha, kerosene, and light oil.

As illustrated in FIG. 1, the hydrogen supply system 100 according to this embodiment includes a liquid transfer pump 1, a heat exchange unit 2, a dehydrogenation reaction unit 3, a heating mechanism 20, a gas-liquid separation unit 6, a compression unit 7, and a hydrogen purification unit 8. Among these, the liquid transfer pump 1, the heat exchange unit 2, and the dehydrogenation reaction unit 3 pertain to a hydrogen production unit 10 that produces a hydrogen-containing gas. In addition, the gas-liquid separation unit 6, the compression unit 7, and the hydrogen purification unit 8 pertain to a hydrogen purity adjustment unit 11 that raises the purity of hydrogen. In addition, the hydrogen supply system 100 includes lines L1 to L12. Note that, in this embodiment, description will be given of a case where MCH is employed as a raw material, and a dehydrogenation product removed in a hydrogen purification process is toluene as an example. Note that, actually, not only toluene but also unreacted MCH, a small amount of by-products, and impurities exist, but in this embodiment, these are considered to be mixed with toluene and show the same behavior as in the toluene. Accordingly, in the following description, it is assumed that "toluene" is intended to include unreacted MCH and by-products.

The lines L1 to L12 are flow paths through which MCH, toluene, a hydrogen-containing gas, an off-gas, high-purity hydrogen, or a heating medium passes. The line L1 is a line for pumping MCH from an MCH tank (not illustrated) by the liquid transfer pump 1, and connects the liquid transfer pump 1 and the MCH tank to each other. The line L2 connects the liquid transfer pump 1 and the dehydrogenation reaction unit 3 to each other. The line L3 connects the dehydrogenation reaction unit 3 and the gas-liquid separation unit 6 to each other. The line L4 connects the gas-liquid separation unit 6 and a toluene tank (not illustrated) to each other. The line L5 connects the gas-liquid separation unit 6 and the compression unit 7 to each other. The line L6 connects the compression unit 7 and the hydrogen purification unit 8 to each other. The line L7 connects the hydrogen purification unit 8 and a supply destination of the off-gas to each other. The line L8 connects the hydrogen purification unit 8 and a purified gas supply device (not illustrated) to each other. The lines L11 and L12 are lines of the heating mechanism 20 and connect a heat medium circulation unit 4 and the dehydrogenation reaction unit 3 to each other. The lines L11 and L12 circulate a heat medium.

The liquid transfer pump 1 supplies MCH that becomes a raw material to the dehydrogenation reaction unit 3. Note that, MCH transported from the outside by a tank lorry or the like is stored in the MCH tank. MCH stored in the MCH tank is supplied to the dehydrogenation reaction unit 3 through the lines L1 and L2 by the liquid transfer pump 1.

The heat exchange unit 2 performs heat exchange between MCH that circulates through the line L2 and the hydrogen-containing gas that circulates through the line L3. A temperature of the hydrogen-containing gas emitted from the dehydrogenation reaction unit 3 is higher than that of the MCH. Accordingly, in the heat exchange unit 2, the MCH is heated by heat of the hydrogen-containing gas. According to this, the MCH is supplied to the dehydrogenation reaction unit 3 in a state in which a temperature is raised. Note that, the MCH is mixed with an off-gas supplied from the hydrogen purification unit 8 through the line L7, and is supplied to the dehydrogenation reaction unit 3.

The dehydrogenation reaction unit 3 is a device that subjects the MCH to a dehydrogenation reaction to obtain hydrogen. That is, the dehydrogenation reaction unit 3 is s device that extracts hydrogen from the MCH by the dehydrogenation reaction using a dehydrogenation catalyst. The dehydrogenation catalyst is not particularly limited, and is selected, for example, from a platinum catalyst, a palladium catalyst, and a nickel catalyst. These catalysts may be carried on a carrier such as alumina, silica, and titania. A reaction of the organic hydride is a reversible reaction, and a direction of the reaction varies in response to a reaction condition (a temperature or a pressure) (restricted by chemical equilibrium). On the other hand, the dehydrogenation reaction is always an endothermic reaction in which the number of molecules increases. Accordingly, conditions of a high temperature and a low pressure are advantageous. Since the dehydrogenation reaction is the endothermic reaction, dehydrogenation reaction unit 3 is supplied with heat from the heat medium circulation unit 4 through a heat medium that circulates through the lines L11 and L12. The dehydrogenation reaction unit 3 includes a mechanism that capable of exchanging heat between the MCH that flows through the dehydrogenation catalyst and the heat medium from the heat medium circulation unit 4. The hydrogen-containing gas extracted in the dehydrogenation reaction unit 3 is supplied to the gas-liquid separation unit 6 through the line L3. The hydrogen-containing gas in the line L3 is supplied to the gas-liquid separation unit 6 in a state of containing liquid toluene as a mixture.

The heating mechanism 20 supplies the heat medium to the dehydrogenation reaction unit 3 by the heat medium circulation unit 4 through the line L 11. In addition, the heating mechanism 20 heats the dehydrogenation reaction unit 3 by heating the circulating heat medium. The heat medium after heating is returned to the heat medium circulation unit 4 through the line L12. The heat medium is not particularly limited, but an oil or the like may be employed. A detailed configuration of the heating mechanism 20 will be described later.

The gas-liquid separation unit 6 is a tank that separates toluene from the hydrogen-containing gas. The gas-liquid separation unit 6 stores the hydrogen-containing gas that contains toluene as a mixture to gas-liquid separate hydrogen that is a gas and toluene that is a liquid from each other. In addition, the hydrogen-containing gas that is supplied to the gas-liquid separation unit 6 is cooled down by the heat exchange unit 2. Note that, the gas-liquid separation unit 6 may be cooled down by a cooling medium from a cold heat source. In this case, the gas-liquid separation unit 6 includes a mechanism capable of exchanging heat between the hydrogen-containing gas in the gas-liquid separation unit 6 and the cooling medium from the cold heat source. Toluene separated by the gas-liquid separation unit 6 is supplied to a toluene tank (not illustrated) through the line L4. The hydrogen-containing gas separated by the gas-liquid separation unit 6 is supplied to the hydrogen purification unit 8 through the lines L5 and L6 by a pressure of the compression unit 7. Note that, when the hydrogen-containing gas is cooled down, a part (toluene) of the gas is liquified, and can be separated from a gas (hydrogen) that is not liquified by the gas-liquid separation unit 6. When a gas is maintained at a low temperature, separation efficiency is raised, and when a pressure is raised, liquefaction of toluene further proceeds.

The hydrogen purification unit 8 removes a dehydrogenation product (toluene in this embodiment) from the hydrogen-containing gas that is obtained by the dehydrogenation reaction unit 3 and is gas-liquid separated by the gas-liquid separation unit 6. According to this, the hydrogen purification unit 8 purifies the hydrogen-containing gas to obtain high-purity hydrogen (purified gas). The purified gas that is obtained is supplied to the line L8. Note that, the off-gas that is generated in the hydrogen purification unit 8 is supplied to the dehydrogenation reaction unit 3 through the line L7.

The hydrogen purification unit 8 is different depending on a hydrogen purification method that is employed. Specifically, in a case of using membrane separation as the hydrogen purification method, the hydrogen purification unit 8 is a hydrogen separation device including a hydrogen separation membrane. In addition, in a case of using a pressure swing adsorption (PSA) method or a temperature swing adsorption (TSA) method as the hydrogen purification method, the hydrogen purification unit 8 is an adsorption removal device including a plurality of adsorption towers which store an adsorbent that adsorb impurities.

Description will be given of a case where the hydrogen purification unit 8 uses membrane separation. In this method, a hydrogen-containing gas pressurized to a predetermined pressure by a compression unit (not illustrated) is caused to permeate a membrane heated to a predetermined temperature, a dehydrogenation product is removed, and a high-purity hydrogen gas (purified gas) can be obtained. The pressure of the gas permeated the membrane is reduced in comparison to a pressure before permeating the membrane. On the other hand, a pressure of a gas that does not permeate the membrane is approximately the same as a predetermined pressure before permeating the membrane. At this time, a gas that does not permeate the membrane corresponds to the off-gas in the hydrogen purification unit 8.

The kind of the membrane that is applied to the hydrogen purification unit 8 is not particularly limited, and a porous membrane (separation by a molecular flow, separation by a surface diffusion flow, separation by capillary condensation operation, separation by molecular sieving operation, and the like), or a non-porous membrane are applicable. As the membrane that is applied to the hydrogen purification unit 8, for example, a metal membrane (a PbAg-based membrane, a PdCu-based membrane, an Nb-based membrane, or the like), a zeolite membrane, an inorganic membrane (a silica membrane, a carbon membrane, or the like), and a polymer membrane (a polyimide membrane or the like) can be employed.

Description will be given of a case of employing the PSA method as the removal method in the hydrogen purification unit 8. An adsorbent that is used in the PSA method has a property of adsorbing toluene contained in the hydrogen-containing gas under a high pressure, and desorbing the adsorbed toluene under a low pressure. The PSA method uses the property of the adsorbent. That is, when the inside of an adsorption tower is set to a high pressure, toluene contained in the hydrogen-containing gas is adsorbed on the adsorbent and is removed to obtain a high-purity hydrogen gas (purified gas). In a case where an adsorption function of the adsorbent decreases, the inside of the adsorption tower is set to a low pressure to desorb toluene adsorbed on the adsorbent, and a part of the purified gas removed in combination is made to flow back to remove the desorbed toluene from the inside of the adsorption tower, thereby regenerating the adsorption function of the adsorbent. At this time, the hydrogen-containing gas that contains at least hydrogen and toluene which is discharged when removing toluene from the inside of the adsorption tower corresponds to the off-gas from the hydrogen purification unit 8.

Description will be given of a case of employing the TSA method as the removal method in the hydrogen purification unit 8. An adsorbent that is used in the TSA method has a property of adsorbing toluene contained in the hydrogen-containing gas under an ordinary temperature, and desorbing the adsorbed toluene under a high temperature. The TSA method uses the property of the adsorbent. That is, when the inside of the adsorption tower is set to an ordinary temperature, toluene contained in the hydrogen-containing gas is adsorbed on the adsorbent and is removed to obtain a high-purity hydrogen gas (purified gas). In a case where the adsorption function of the adsorbent decreases, the inside of the adsorption tower is set to a high temperature to desorb toluene adsorbed on the adsorbent, and a part of high-impurity hydrogen removed in combination is caused to flow back to remove the desorbed toluene from the inside of the adsorption tower, thereby regenerating the adsorption function of the adsorbent. At this time, the hydrogen-containing gas that contains at least hydrogen and toluene which is discharged when removing toluene from the inside of the adsorption tower corresponds to the off-gas from the hydrogen purification unit 8.

Next, characteristic portions of the above-described hydrogen supply system 100 will be described.

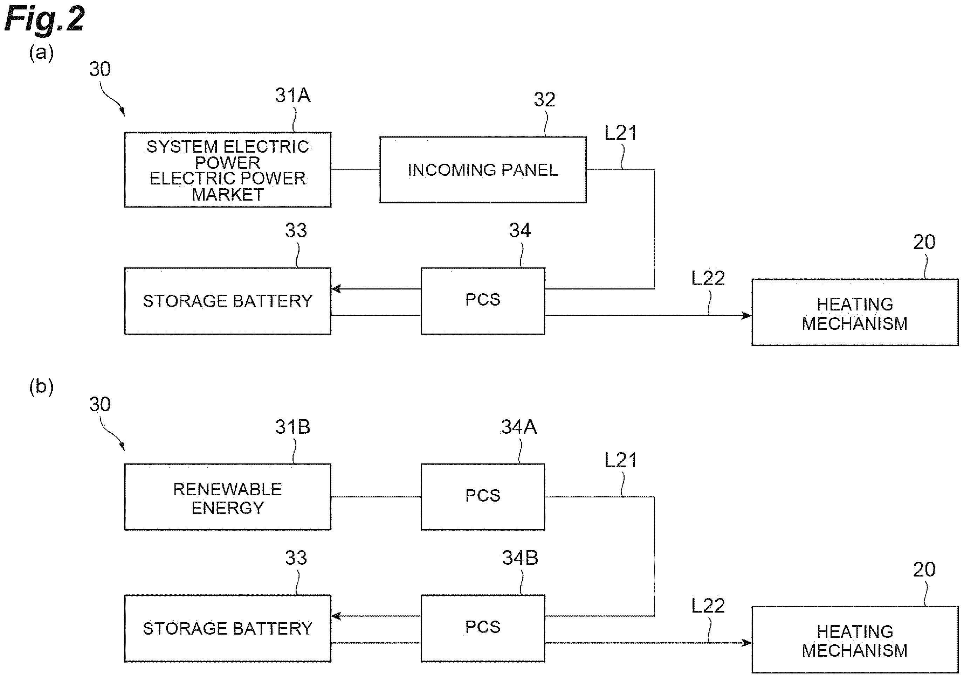

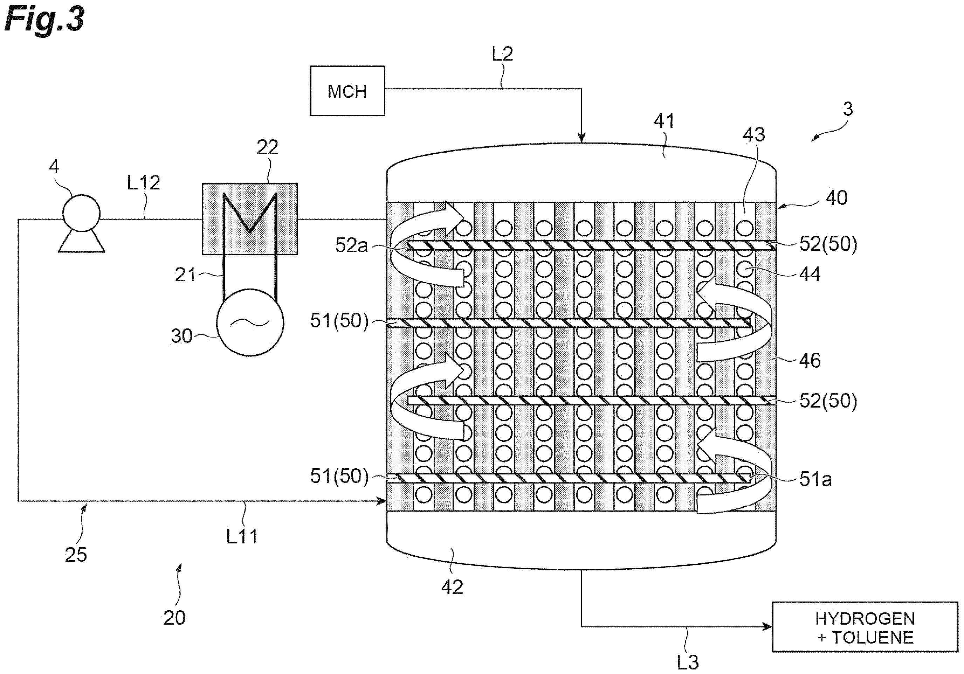

FIG. 2 is a view illustrating an example of a configuration of an electric power supply unit 30 that supplies electric power to the heating mechanism 20. FIG. 3 is a conceptual diagram illustrating an example of the heating mechanism 20. As illustrated in FIG. 3, the heating mechanism 20 includes an electric heater, and thus the heating mechanism 20 can heat the dehydrogenation reaction unit 3 by using electric power. Accordingly, as illustrated in FIG. 2, the hydrogen supply system 100 includes the electric power supply unit 30 that supplies electric power to the heating mechanism 20.

The electric power supply unit 30 illustrated in FIG. 2(a) is a system that can efficiently use grid power. The electric power supply unit 30 includes an electric power source 31A, a storage battery 33 (electrical storage unit), a line L21, and a line L22. The electric power source 31A supplies grid power from an electric power market. The electric power source 31A can supply electric power by thermal power generation equipped with carbon dioxide capture and storage (CCS). The thermal power generation equipped with CCS is thermal power generation that uses a technology of capturing discharged carbon dioxide and storing the carbon dioxide in the underground without emitting the carbon dioxide to the air. Accordingly, the thermal power generation equipped with CCS can further suppress generation of CO₂ in comparison to typical thermal power generation. The line L21 a line that connects the electric power source 31A and the storage battery 33 to each other. The electric power source 31A supplies electric power to the storage battery 33 through the line L21. Note that, the line L21 is provided with an incoming panel 32 and a PCS 34. Accordingly, electric power from the electric power source 31A is adjusted by the incoming panel 32, and is converted from AC to DC by the PCS 34, and is supplied to the storage battery 33. The line L22 is a line that connects the storage battery 33 and the heating mechanism 20 to each other. The storage battery 33 supplies electric power to the heating mechanism 20 through the line L22. Note that, the line L22 is connected to the PCS 34. Accordingly, electric power from the storage battery 33 is converted from DC to AC by the PCS 34, and is supplied to the heating mechanism 20. For example, the electric power supply unit 30 stores electric power from the electric power source 31A in the storage battery 33 when the unit price of electric power at an electric power market is not expensive, and electric power is used in the heating mechanism 20. When the unit price of electric power is high, the electric power supply unit 30 discharges electric power from the storage battery 33 and supplies electric power to the heating mechanism 20. Note that, renewable energy can also be supplied from the electric power source 31A using grid power. In addition, the electric power source 31A using grid power may supply electric power based on various power generation methods without limitation to electric power based on thermal power generation equipped with CCS or renewable energy. In addition, the electric power supply unit 30 may supply electric power directly to the heating mechanism 20 from the incoming panel 32.

The electric power supply unit 30 illustrated in FIG. 2(b) is a system capable of supplying electric power based on renewable energy. The electric power supply unit 30 includes an electric power source 31B, a storage battery 33 (electrical storage unit), a line L21, and a line L22. The electric power source 31B supplies electric power based on renewable energy. The renewable energy is energy obtained by using the power of the natural world, and examples of a power generation type by renewable energy include solar power generation, hydroelectric power generation, wind power generation, wave power generation, tidal power generation, geothermal power generation, and the like. In a case of using renewable energy, the heating mechanism 20 can produce hydrogen without discharging carbon dioxide or in a state in which the discharge amount is suppressed differently from a case of obtaining energy by combusting a fossil fuel. The electric power source 31B supplies electric power to the storage battery 33 through the line L21. Note that, the line L21 is provided with a PCS 34A that adjusts electric power immediately after being supplied from the electric power source 31B, and a PCS 34B that adjusts electric power immediately before being supplied to the storage battery 33. Accordingly, electric power from the electric power source 31A is converted from DC to AC by the PCS 34A, is converted from AC to DC by the PCS 34B, and is supplied to the storage battery 33. The storage battery 33 supplies electric power to the heating mechanism 20 through the line L22. Note that, the line L22 is connected to the PCS 34B. Accordingly, electric power from the storage battery 33 is converted from DC to AC by the PCS 34B and is supplied to the heating mechanism 20. Electric power based on renewable energy fluctuates depending on an environment. For example, since the solar power generation depends on weather, it cannot be said that required electric power is obtained at timing at which heating by the heating mechanism 20 is required. Therefore, the electric power supply unit 30 stores electric power from the electric power source 31B in the storage battery 33 and uses electric power in the heating mechanism 20 at timing at which a large amount of electric power is obtained. Then, when electric power from the electric power source 31B is deficient, the electric power supply unit 30 discharges electric power from the storage battery 33 and supplies the electric power to the heating mechanism 20. Note that, the electric power supply unit 30 may include both the electric power source 31A using grid power and the electric power source 31B using renewable energy, and may use both the power supplies separately.

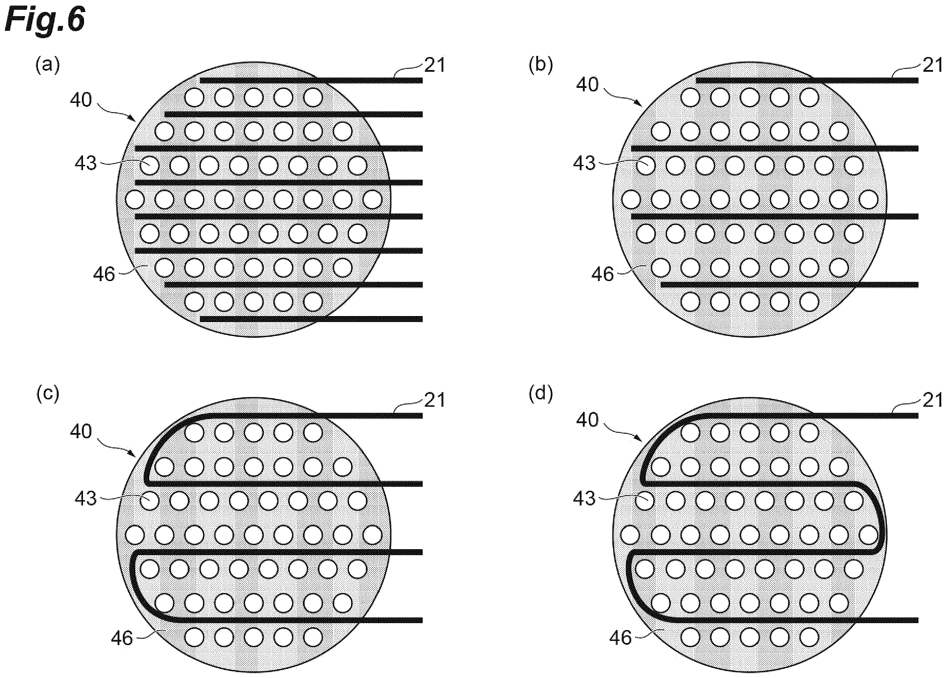

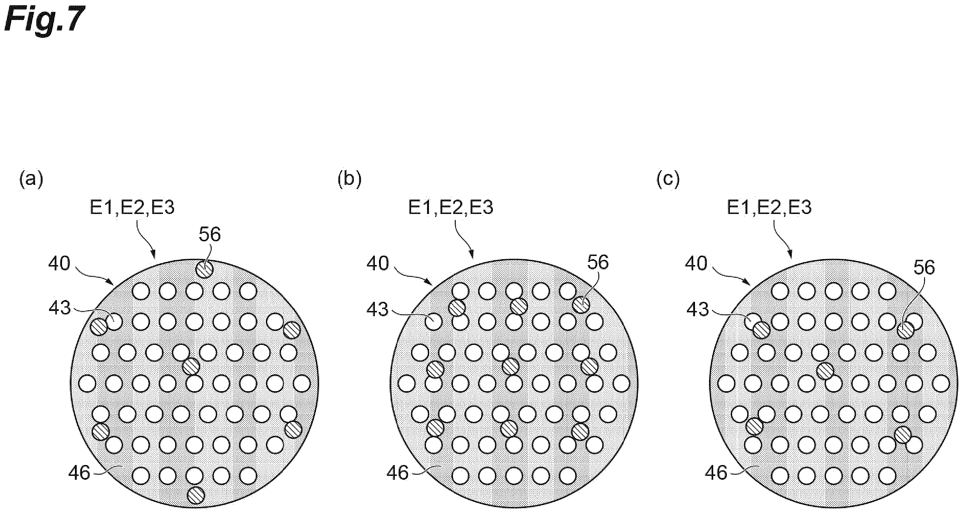

Next, a specific configuration of the heating mechanism 20 will be described in detail with reference to FIG. 3. FIG. 3 is a schematic configuration diagram illustrating a configuration of the dehydrogenation reaction unit 3 and the heating mechanism 20 according to this embodiment. As illustrated in FIG. 3, the dehydrogenation reaction unit 3 includes a cylindrical dehydrogenation reaction container 40. The dehydrogenation reaction container 40 includes a header portions 41 and 42, an MCH flow passage 43 (first flow passage), and a heat medium flow passage 46 (second flow passage). The MCH flow passage 43 is a flow passage in which a dehydrogenation catalyst 44 that performs a dehydrogenation reaction is disposed and through which MCH circulates. The MCH flow passage 43 is constituted by arranging a plurality of tubular members in parallel in a state of the plurality of tubular members are separated from each other (for example, refer to FIG. 6 and FIG. 7). The header portion 41 is provided at an inlet side end of the MCH flow passage 43 constituted by the plurality of tubular members. The header portion 41 is connected to the line L2 and disperses MCH supplied from the line L2 at an internal space. According to this, the header portion 41 distributes MCH to each of a plurality of the MCH flow passages 43. The header portion 42 is provided at an outlet side end of the MCH flow passages 43 constituted by the plurality of tubular members. The header portion 42 collects a hydrogen-containing gas from each of the MCH flow passages 43 in an internal space, and supplies the hydrogen-containing gas to the line L3.

The heat medium flow passage 46 is a flow passage which is provided in parallel with the MCH flow passages 43, and through which a heat medium circulates. The heat medium flow passage 46 is formed at the inside of an outer peripheral wall portion of the dehydrogenation reaction container 40. The outer peripheral wall portion of the dehydrogenation reaction container 40 surrounds all of the MCH flow passages 43 from the outer periphery side. According to this, a space located on an inner side of the outer peripheral wall portion of the dehydrogenation reaction container 40 and on an outer side of the MCH flow passages 43 is constituted as the heat medium flow passage 46 (for example, refer to FIG. 6 and FIG. 7). Note that, in FIG. 3 to FIG. 7, a dot pattern is given to a site where the heat medium exist.

The heating mechanism 20 includes a heat medium supply unit 25 and a heating unit 21. The heat medium supply unit 25 includes the above-described heat medium circulation unit 4, and the lines L11 and L12. The heat medium circulation unit 4 is constituted by a pump that pumps a heat medium. In this embodiment, the line L11 on a supply side is provided at an end on the header portion 42 side in the heat medium flow passage 46. The line L12 on a recovery side is provided at an end of the header portion 41 side in the heat medium flow passage 46. Accordingly, the heat medium flows through the heat medium flow passage 46 in a direction opposite to a flow of a fluid inside the MCH flow passage 43, that is, to form a counterflow.

The line L12 is provided with a heat medium tank 22. The heat medium tank 22 is provided with the heating unit 21. The heating unit 21 heats the dehydrogenation catalyst 44 through the heat medium. In this embodiment, the heating unit 21 is constituted by a heater that generates heat by electric power supplied from the electric power supply unit 30. According to the configuration, the heat medium is heated in the heat medium tank 22 by the heating unit 21, and is supplied to the heat medium flow passage 46 through the line L11.

Here, the heat medium flow passage 46 is divided into a plurality of sections by a partition member 50 provided inside the heat medium flow passage 46 in an upper and lower direction (first direction) in which the heat medium flow passage 46 extends. Note that, in this embodiment, the upper and lower direction corresponds to an axial direction in which the dehydrogenation reaction container 40 extends, and also corresponds to a direction in which the MCH flow passage 43 extends. In addition, in this embodiment, the axial direction of the dehydrogenation reaction container 40 is arranged to be parallel with the upper and lower direction, but the axial direction may be arranged to be a horizontal direction. The dehydrogenation reaction container 40 includes a plurality of the partition members 50 arranged to be separated from each other in the upper and lower direction. The partition members 50 are members extending in the horizontal direction (second direction) that intersects (here, that is orthogonal to) the upper and lower direction. In this embodiment, as the partition members 50, baffles 51 and 52 are provided. The baffle 51 includes an opening 51a, which permits circulation of the heat medium in the upper and lower direction, on one end side in the horizontal direction. The baffle 52 includes an opening 52a on a side opposite to the opening 51a in the horizontal direction. The baffle 51 and the baffle 52 are alternately disposed in the upper and lower direction. Accordingly, the heat medium flowing through the heat medium flow passage 46 meanders through the opening 51a of the baffle 51 and the opening 52a of the baffle 52. In each section sandwiched between the baffle 51 and the baffle 52, the heat medium flows in a horizontal direction along the baffles 51 and 52.

Next, an operation and an effect of the hydrogen supply system 100 according to this embodiment will be described.

The hydrogen supply system 100 includes the heating mechanism 20 that heats the dehydrogenation reaction unit 3 by using electric power. The electric power supply unit 30 that supplies electric power to the heating mechanism 20 can supply at least one of electric power based on renewable energy and electric power based on thermal power generation equipped with carbon dioxide capture and storage to the heating mechanism 20 (refer to FIGS. 2(a) and 2(b)). According to this, the heating mechanism 20 can heat the dehydrogenation reaction unit 3 by at least one of electric power based on renewable energy and electric power based on thermal power generation equipped with carbon dioxide capture and storage. The hydrogen supply system 100 can produce hydrogen by using renewable energy without using a fossil fuel or in a state in which the fossil fuel is reduced. In addition, the hydrogen supply system 100 can reduce CO₂ when obtaining electric power by using thermal power generation equipped with CCS. As described above, CO₂ when producing hydrogen can be reduced. In addition, in a case where the heating mechanism 20 heats the dehydrogenation reaction unit 3 by combusting the fossil fuel, a tank that stores the fossil fuel is required. In contrast, in the hydrogen supply system 100 according to this embodiment, the fossil fuel tank may not necessary (or may be reduced in size).

The electric power supply unit 30 may include the storage battery 33 that stores at least one of electric power based on the renewable energy, and electric power based on the thermal power generation equipped with carbon dioxide capture and storage. In the electric power based on the renewable energy, it may be difficult to obtain an output in accordance with user's intention differently from energy by a fossil fuel. For example, solar power generation, wind power generation, hydroelectric power generation, and the like are dependent on weather and natural conditions. In contrast, the electric power supply unit 30 includes the storage battery 33 that stores electric power. Accordingly, the storage battery 33 can store electric power when a large amount of renewable energy is obtained and electric power that is used by the heating mechanism 20 is small. In addition, the storage battery 33 can supply the stored electric power at timing at which the obtained renewable energy is small. In addition, in a case of using electric power based on the thermal power generation equipped with CCS, the electric power supply unit 30 can store electric power in the storage battery 33 at timing at which electric power is easily obtained (timing at which electric power is not expensive, or the like), and can supply the stored electric power at timing at which electric power is difficult to be obtained.

Since the heating mechanism 20 includes the heating unit 21, the heating mechanism 20 can supply heat to the dehydrogenation catalyst 44 that performs an endothermic reaction. Here, the dehydrogenation reaction unit 3 includes the heat medium flow passage 46 that is provided in parallel with the MCH flow passage 43 in which the dehydrogenation reaction is performed by the dehydrogenation catalyst 44. The heat medium supply unit 25 of the heating mechanism 20 supplies the heat medium to the heat medium flow passage 46. In addition, the heating unit 21 of the heating mechanism 20 heats the dehydrogenation catalyst through the heat medium. The heating mechanism 20 can heat the dehydrogenation catalyst 44 by diffusing heat of the heating unit 21 to the inside of the heat medium flow passage 46 by the heat medium. Accordingly, the heating mechanism 20 can improve heating uniformity at the inside of the dehydrogenation reaction unit 3. As described above, since the heating uniformity is improved, and heat usage efficiency is improved, energy can be effectively used. As a result, CO₂ when producing hydrogen can be reduced.

The heat medium flow passage 46 may be divided into a plurality of sections by the partition member 50 provided inside the heat medium flow passage 46 in an upper and lower direction in which the heat medium flow passage 46 extends. As described above, when the heat medium flow passage 46 is divided into the plurality of sections, the heating mechanism 20 can adjust a heating aspect in correspondence with the sections. In this embodiment, a direction in which the heat medium flows or staying time in each of the sections is adjusted by the baffles 51 and 52. According to this, heat usage efficiency is improved, and thus energy can be effectively used.

The baffle 51 that constitutes the partition member 50 includes the opening 51a, which permits circulation of the heat medium in the upper and lower direction, on one end side in the horizontal direction. The baffle 52 that constitutes the partition member 50 includes the opening 52a, which permits circulation of the heat medium in the upper and lower direction, on the other side in the horizontal direction. In this case, in an upstream side section portioned by the baffle 51, the heat medium flows to one end side in the horizontal direction toward the opening 51a, and flows to a downstream side section through the opening 51a. As described above, in the upstream side section of the baffle 51, since a horizontal flow of the heat medium is formed, staying time of the heat medium in the section can be lengthened. In addition, in the downstream side section of the baffle 51, since the heat medium flows toward the opening 51a, staying time of the heat medium in the section can be lengthened.

Note that, since the dehydrogenation reaction is an endothermic reaction, the amount of heat adsorbed is different between an inlet side portion, an intermediate portion, and an outlet side portion of the MCH flow passage 43. Here, the amount of heat adsorbed of the inlet side portion increases. For example, in a case of supplying the heat medium from the inlet side, the dehydrogenation catalyst 44 on the inlet side can be sufficiently heated, but the amount of heat of the heat medium may decrease and heating for the dehydrogenation catalyst 44 on the outlet side may be insufficient. In contrast, in this embodiment, since the heating mechanism 20 supplies the heat medium from the outlet side to be a counterflow with respect to a fluid in the MCH flow passage 43, the above-described deficiency in the amount of heat can be avoided, and a conversion rate can be improved. Note that, a heat medium temperature is preferably set to, for example, 300°C to 340°C.

The present disclosure is not limited to the above-described embodiment.

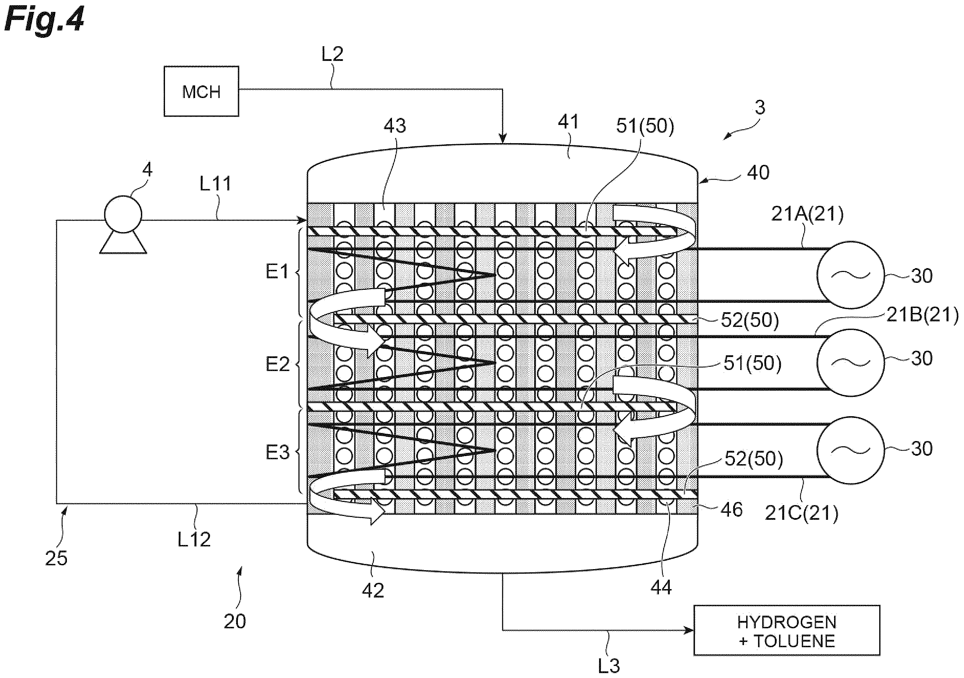

For example, a heating mechanism 20 and a dehydrogenation reaction unit 3 illustrated in FIG. 4 may be employed. In a modification example illustrated in FIG. 4, the heating mechanism 20 includes a plurality of heating units 21A, 21B, and 21C, each being disposed for each of a plurality of (here, three) sections E1, E2, and E3 at the inside of the heat medium flow passage 46. Here, with respect to the heat medium flow passage 46, the heat medium supply unit 25 supplies the heat medium from the header portion 41 side, and recovers the heat medium from the header portion 42 side. The heat medium flow passage 46 is provided with a first baffle 51, a first baffle 52, a second baffle 51, and a second baffle 52 from the header portion 41 side. Among these, the section E1 on an inlet side is formed between the first baffle 51 and the first baffle 52. The section E2 of an intermediate portion is formed between the first baffle 52 and the second baffle 51. The section E3 on an outlet side is formed between the second baffle 51 and the second baffle 52.

Here, heaters of the heating units 21 (21A, 21B, and 21C) provided inside the heat medium flow passage 46 are arranged so that a temperature distribution in a horizontal direction of the heat medium flow passage 46 becomes uniform. For example, an arrangement as illustrated in FIG. 6 may be employed. For example, as illustrated in FIG. 6(a), in a case where the MCH flow passages 43 are arranged in a predetermined row, each of the heaters of the heating units 21 may be arranged in a gap between rows of the MCH flow passages 43. In addition, as illustrated in FIG. 6(b), the heaters of the heating units 21 may be arranged in a ratio of one to a plurality of rows. In addition, as illustrated in FIG. 6(c), the heaters of the heating units 21 may be folded back once, and may be stretched around rows of the MCH flow passages 43. In addition, as illustrated in FIG. 6(d), the heaters of the heating units 21 may be arranged to be folded back a plurality of times.

In addition, the heating mechanism 20 may include a plurality of temperature detection units, each detecting a temperature of each of the plurality of sections E1, E2, and E3. Specifically, as illustrated in FIG. 7, a temperature detection unit 56 is arranged inside the heat medium flow passage 46 with respect to each of the sections E1, E2, and E3. As the temperature detection unit 56, for example, a thermocouple or the like is employed. In addition, as illustrated in FIGS. 7(a), 7(b), and 7(c), a plurality of the temperature detection units 56 are arranged with an interval in a horizontal direction so that a drift of the heat medium can be confirmed.

As described above, the heating units 21 are provided inside the heat medium flow passage 46. In this case, the heating units 21 are provided in the heat medium flow passage 46 provided in parallel with the MCH flow passages 43. Accordingly, heat of the heating units 21 is efficiently transferred to the dehydrogenation catalyst 44.

In addition, the heating mechanism 20 includes a plurality of heating units 21A, 21B, and 21C, each being disposed for each of the plurality of sections E1, E2, and E3 at the inside of the heat medium flow passage 46. The plurality of heating units 21A, 21B, and 21C can adjust a heating aspect in correspondence with the sections E1, E2, and E3. According to this, heat usage efficiency is improved, and energy can be effectively used.

The heating mechanism 20 includes the plurality of temperature detection units 56, each detecting a temperature of each of the plurality of sections E1, E2, and E3. The plurality of temperature detection units 56 can detect the temperature of the sections E1, E2, and E3, and thus the heating mechanism 20 can adjust a heating aspect in correspondence with the sections E1, E2, and E3 on the basis of the detection result. According to this, heat usage efficiency is improved, and energy can be effectively used. As described above, since the amount of heat adsorbed of the dehydrogenation catalyst 44 of the section E1 on the inlet side is large, in a case where heat is insufficient in the section E1, the heating units 21 grasps the situation by the temperature detection units 56, and raises an output.

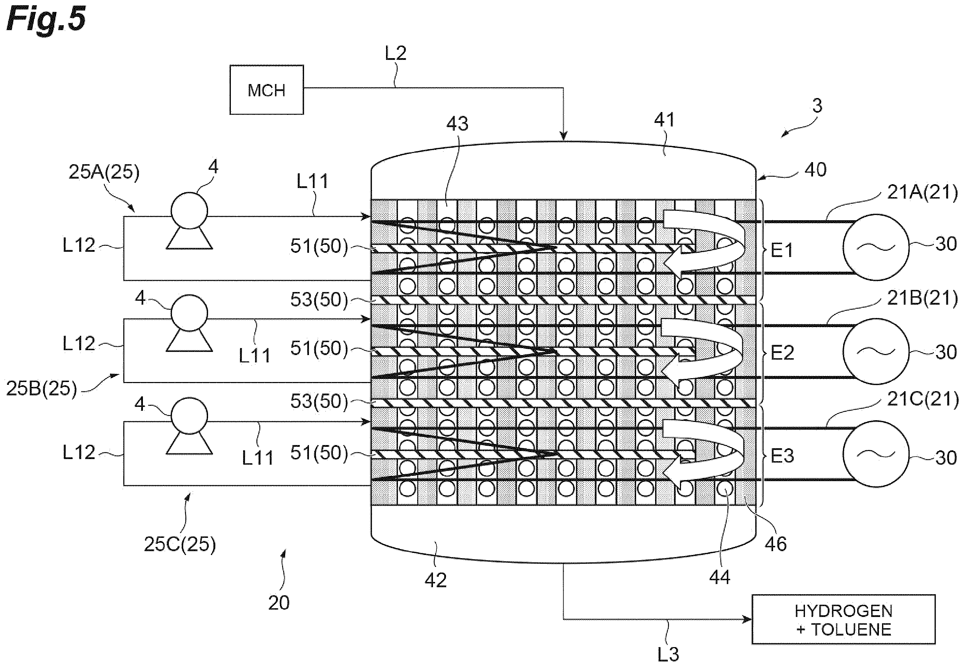

In addition, a heating mechanism 20 and a dehydrogenation reaction unit 3 illustrated in FIG. 5 may be employed. In a modification example illustrated in FIG. 5, a baffle 53 that constitutes the partition member 50 closes a space between the sections E1, E2, and E3 different from each other. In addition, the heating mechanism 20 includes a plurality of heat medium supply units 25A, 25B, and 25C, each supplying the heat medium to each of the plurality of sections E1, E2, and E3. Note that, the heating mechanism 20 includes a plurality of heating units 21A, 21B, and 21C, each being arranged for each of the plurality of sections E1, E2, and E3 at the inside of the heat medium flow passage 46. The heat medium flow passage 46 is provided with a first baffle 51, a first baffle 53, a second baffle 51, a second baffle 53, and a third baffle 51 in the order from the header portion 41 side. Among these, the section E1 on the inlet side is formed between the header portion 41 and the first baffle 53. The section E2 of an intermediate portion is formed between the first baffle 53 and the second baffle 53. The section E3 on the outlet side is formed between the second baffle 53 and the header portion 42. Note that, in the sections E1, E2, and E3, the heat medium supply units 25A, 25B, and 25C supply the heat medium from an upper side of the baffle 51 and recover the heat medium from a lower side of the baffle 51. Note that, the sections E1, E2, and E3 are provided with the temperature detection unit 56 illustrated in FIG. 7.

As described above, the baffle 53 that constitutes the partition member 50 closes a space between the sections E1, E2, and E3 different from each other, and the heating mechanism 20 includes the plurality of heat medium supply units 25A, 25B, and 25C which supply the heat medium to the plurality of sections E1, E2, and E3, respectively. The plurality of heat medium supply units 25A, 25B, and 25C can adjust a supply aspect of the heat medium in correspondence with a detection result obtained by the temperature detection units 56 of the sections E1, E2, and E3. According to this, heat usage efficiency is improved, and thus energy can be effectively used.

Note that, as illustrated in FIG. 3 to FIG. 5, the heating mechanism 20 heats the dehydrogenation catalyst 44 by supplying the heat medium to the dehydrogenation reaction unit 3. Instead of this or in addition to this, the heating mechanism 20 may heat MCH by the line L2 on an upstream side of the dehydrogenation reaction unit 3. For example, the line L2 may be provided with a heat exchange unit that performs heat exchange between the heat medium from the heating mechanism 20 and the MCH.

The hydrogen supply system is a hydrogen supply system that supplies hydrogen, and may include a dehydrogenation reaction unit that subjects a raw material including a hydride to a dehydrogenation reaction to obtain a hydrogen-containing gas, a heating mechanism that heats the dehydrogenation reaction unit by using electric power, and an electric power supply unit that supplies electric power from grid power to the heating mechanism.

In addition, in the above-described embodiment, a hydrogen station for FVC has been exemplified as the hydrogen supply system, but the hydrogen supply system may be, for example, a hydrogen supply system for distributed power supplies such as a power supply for household, and a power supply for emergency.

### Reference Signs List

3: dehydrogenation reaction unit, 20: heating mechanism, 21, 21A, 21B, 21C: heating unit, 25, 25A, 25B, 25C: heat medium supply unit, 30: electric power supply unit, 33: storage battery (electrical storage unit), 43: MCH flow passage (first flow passage), 44: dehydrogenation catalyst, 46: heat medium flow passage (second flow passage), 50: partition member, 51, 52, 53: baffle (partition member), 56: temperature detection unit, 100: hydrogen supply system.

## Claims

1. A hydrogen supply system that supplies hydrogen, comprising:
a dehydrogenation reaction unit that subjects a raw material including a hydride to a dehydrogenation reaction to obtain a hydrogen-containing gas;
a heating mechanism that heats the dehydrogenation reaction unit by using electric power; and
an electric power supply unit that supplies at least one of electric power based on renewable energy and electric power based on thermal power generation equipped with carbon dioxide capture and storage to the heating mechanism.

2. The hydrogen supply system according to claim 1,
wherein the electric power supply unit includes an electrical storage unit that stores at least one of electric power based on the renewable energy, and electric power based on the thermal power generation equipped with carbon dioxide capture and storage.

3. A hydrogen supply system that supplies hydrogen, comprising:
a dehydrogenation reaction unit that subjects a raw material including a hydride to a dehydrogenation reaction to obtain a hydrogen-containing gas; and
a heating mechanism that heats the dehydrogenation reaction unit by using a heat medium,
wherein the dehydrogenation reaction unit includes,
a first flow passage in which a dehydrogenation catalyst that performs the dehydrogenation reaction is disposed and through which the raw material circulates, and
a second flow passage which is provided in parallel with the first flow passage, and through which the heat medium circulates, and
the heating mechanism includes,
a heat medium supply unit that supplies the heat medium to the second flow passage of the dehydrogenation reaction unit, and
a heating unit that heats the dehydrogenation catalyst through the heat medium.

4. The hydrogen supply system according to claim 3,
wherein the heating unit is provided inside the second flow passage.

5. The hydrogen supply system according to claim 3 or 4,
wherein the second flow passage is divided into a plurality of sections by a partition member provided inside the second flow passage in a first direction in which the second flow passage extends.

6. The hydrogen supply system according to claim 5,
wherein the heating mechanism includes a plurality of the heating units, each being disposed for each of the plurality of sections at the inside of the second flow passage.

7. The hydrogen supply system according to claim 5 or 6,
wherein the heating mechanism includes a plurality of temperature detection units, each detecting a temperature of each of the plurality of sections.

8. The hydrogen supply system according to any one of claims 5 to 7,
wherein the partition member includes an opening that permits circulation of the heat medium in the first direction on one end side in a second direction that intersects the first direction.

9. The hydrogen supply system according to any one of claims 5 to 7,
wherein the partition member closes a space between the sections different from each other, and
the heating mechanism includes a plurality of the heat medium supply units, each supplying the heat medium to each of the plurality of sections.

10. A hydrogen supply system that supplies hydrogen, comprising:
a dehydrogenation reaction unit that subjects a raw material including a hydride to a dehydrogenation reaction to obtain a hydrogen-containing gas;
a heating mechanism that heats the dehydrogenation reaction unit by using electric power; and
an electric power supply unit that supplies electric power from grid power to the heating mechanism.
